# EUROPÄISCHE PATENTSCHRIFT

(11) **EP 0 674 962 B1**
(45) Veröffentlichungstag und Bekanntmachung des Hinweises auf die Patenterteilung: **25.06.1997**
(21) Anmeldenummer: 95101206.1
(22) Anmeldetag: 30.01.1995
(51) Int. Cl.: B23D 51/02, B23D 49/00, B23Q 9/00, B27G 5/02

(54) **Vorrichtung zum Ablängen von Hohlprofilen**
Device for cutting at length hollow structural members
Dispositif pour la coupe en longueur de profilés creux

(30) Priorität: 31.03.1994 DE 4411291
(43) Veröffentlichungstag der Anmeldung: 04.10.1995
(73) Patentinhaber: Schefe, Ines, D-88662 Überlingen (DE)
(72) Erfinder: Berthold, Holger, D-88682 Salem-Mittelstenweiler (DE)
(74) Vertreter: Engelhardt, Guido, Dipl.-Ing.

(56) Entgegenhaltungen:
- EP-A- 0 172 555
- GB-A- 562 837
- US-A- 1 574 663
- US-A- 3 584 663
- US-A- 3 741 064

## Beschreibung

Die Erfindung bezieht sich auf eine Vorrichtung zum Ablängen von Hohlprofilen, insbesondere von Kanalprofilen aus Stahlblech für Brüstungskanäle, mittels einer von Hand zu führenden Stichsäge oder eines ähnlichen Werkzeuges, bestehend aus einer zwei gegeneinander verstellbare Spannplatten aufweisende Spanneinrichtung zur Halterung des Hohlprofils und einem mit dieser verbundenen Führungsglied, das durch zwei mit Führungsschlitzen zur Aufnahme des Sägeblattes der Stichsäge versehene Führungsschienen gebildet ist.

Eine Vorrichtung dieser Art, die sich in der Praxis gut bewährt hat, ist durch die DE-U1-92 17 392.6 bekannt. Da die das Führungsglied bildenden Schienen hierbei nur vertikal zueinander verstellbar sind und die in diese eingearbeiteten Schlitze achssenkrecht zu dem abzulängenden Hohlprofil verlaufen, können Profile somit nur rechtwinklig abgesägt werden, Gehrungsschnitte sind demnach nicht möglich. Um aber dennoch mit solchen Hohlprofilen einen Brüstungskanal über Eck verlegen zu können, müssen in diese Formstücke eingesetzt werden. Diese sind aber sehr teuer, auch sind derartige Verlegearbeiten zeitaufwendig. Eine vielseitige Verwendbarkeit der bekannten Vorrichtung ist daher nicht gegeben.

Aufgabe der Erfindung ist es somit, eine Vorrichtung zum Ablängen von Hohlprofilen der eingangs genannten Gattung zu schaffen, mittels der es nicht nur möglich ist, Hohlprofile rechtwinklig abzusägen, sondern diese sollen auch auf einfache Weise auf Gehrung geschnitten werden können, und zwar soll ein Gehrungswinkel beliebig einstellbar sein. Des weiteren sollen die jeweiligen Gehrungswinkel ohne Schwierigkeiten in Abhängigkeit von der vorgegebenen Höhe des abzulängenden Hohlprofils einzustellen sein, dennoch soll das Sägeblatt der Stichsäge stets gut geführt sein, so daß eine leiche Handhabung und ein äußerst vielseitiger Einsatzbereich der Vorrichtung gegeben sind.

Gemäß der Erfindung wird dies bei einer Vorrichtung zum Ablängen von Hohlprofilen der vorgenannten Art dadurch erreicht, daß eine der Führungsschienen, vorzugsweise die auf der Oberseite der Vorrichtung angeordnete Führungsschiene, in Achsrichtung des einzuspannenden Hohlprofils verschiebbar mit der höhenverstellbaren Spannplatte der Spanneinrichtung verbunden und verschwenkbar gehalten ist und daß der Führungsschlitz der anderen ortsfesten Führungsschiene mit einer keilförmig gestalteten Freisparung versehen ist, die in jeder Betriebsstellung der verstellbaren Führungsschiene mit deren Führungsschlitz fluchtet.

Zweckmäßig ist es hierbei, die verstellbare Führungsschiene mittels eines Schlittens mit der höhenverstellbaren Spannplatte der Spanneinrichtung begrenzt verschiebbar zu verbinden und den Schlitten durch zwei Arme zu bilden, die auf den beiden Außenseiten der höhenverstellbaren Spannplatte der Spanneinrichtung verschiebbar geführt sind.

Des weiteren ist es angebracht, die verstellbare Führungsschiene mittels zweier Bolzen begrenzt verdrehbar in den beiden Armen des Schlittens zu lagern, wobei deren Winkelstellung mittels auf die Lagerbolzen einwirkender durch Spannhebel betätigbarer Klemmplatten oder dgl. arretierbar und der Schwenkwinkel mit Hilfe vorzugsweise an den Außenseiten des Schlittens vorgesehener Skallierungen, mit denen mit der Führungsschiene fest verbundene Stellhebel zusammenwirken, einstellbar sein sollten.

Auch der Schlitten sollte mittels an der höhenverstellbaren Spannplatte der Spanneinrichtung angebrachter, vorzugsweise beide Arme des Schlittens in Längsschlitzen durchgreifender Spannhebel arretierbar und dessen Verstellbereich mittels vorzugsweise an der verstellbaren Spannplatte der Spanneinrichtung angebrachter Skallierungen einstellbar sein.

Vorteilhaft ist es ferner, die verstellbare Führungsschiene auf ihrer Unterseite mit einer durch eine in diese auf der der Spanneinrichtung abgewandten Seite neben dem Führungsschlitz eingearbeitete Freisparung gebildete Fläche zur Auflage auf dem Hohlprofil zu versehen und die in die ortsfest angeordnete Führungsschiene eingearbeitete Freisparung unter einem Winkel α von etwa 50° nach außen divergierend auszubilden.

Selbstverständlich ist es möglich, das Führungsglied zusätzlich an einer achssenkrecht zu dem abzulängenden Hohlprofil angeordnete Führungsschienen aufweisende Ablängvorrichtung anzubringen.

Wird eine Vorrichtung zum Ablängen von Hohlprofilen gemäß der Erfindung ausgebildet, so ist es nicht nur möglich, ein in der Spanneinrichtung eingespanntes Hohlprofil auf einfache Weise rechtwinklig abzusägen, sondern vor allem können im Bedarfsfall mit der gleichen Vorrichtung auch Gehrungsschnitte vorgenommen werden, so daß Brüstungskanäle in einem Gebäude auch über Eck geführt werden können, ohne daß es dazu teurer Winkelstücke und einen zusätzlichen Arbeitsaufwand bedarf. Der Winkel, unter dem zwei Profile aneinanderstoßen, kann dabei frei gewählt werden, da die Schnittwinkel, unter denen die Profile abzulängen sind, mittels der vorschlagsgemäß ausgebildeten Vorrichtung problemlos einzustellen sind. Die Einstellung wird hierbei in Abhängigkeit von der jeweiligen Höhe des Hohlprofils vorgenommen, ein Verschnitt ist somit nahezu ausgeschlossen.

Durch die verstellbare Führungsschiene sowie die freigesparte Führungsschiene ist des weiteren gewährleistet, daß in jeder Betriebsstellung des Führungsgliedes das Sägeblatt einer von Hand verstellbaren Stichsäge auf zwei einander gegenüberliegenden Seiten des Hohlprofils in dessen unmittelbarer Nähe stets sicher geführt ist. Die vorschlagsgemäß ausgebildete Vorrichtung ist, da Profile unterschiedlicher Höhe unter beliebigen Schnittwinkeln maßgenau abzulängen und auch die Vorteile der bekannten Ausgestaltung gegeben sind, in äußerst vielseitiger Weise einsetzbar.

In der Zeichnung ist ein Ausführungsbeispiel der gemäß der Erfindung ausgebildeten Vorrichtung zum Ablängen von Hohlprofilen dargestellt, das nachfolgend im einzelnen erläutert ist. Hierbei zeigt:
- Figur 1: Die Vorrichtung in Vorderansicht,
- Figur 2: die Vorrichtung nach Figur 1 in Draufsicht, und
- Figur 3: die Vorrichtung nach Figur 1, teilweise in einem Längsschnitt.

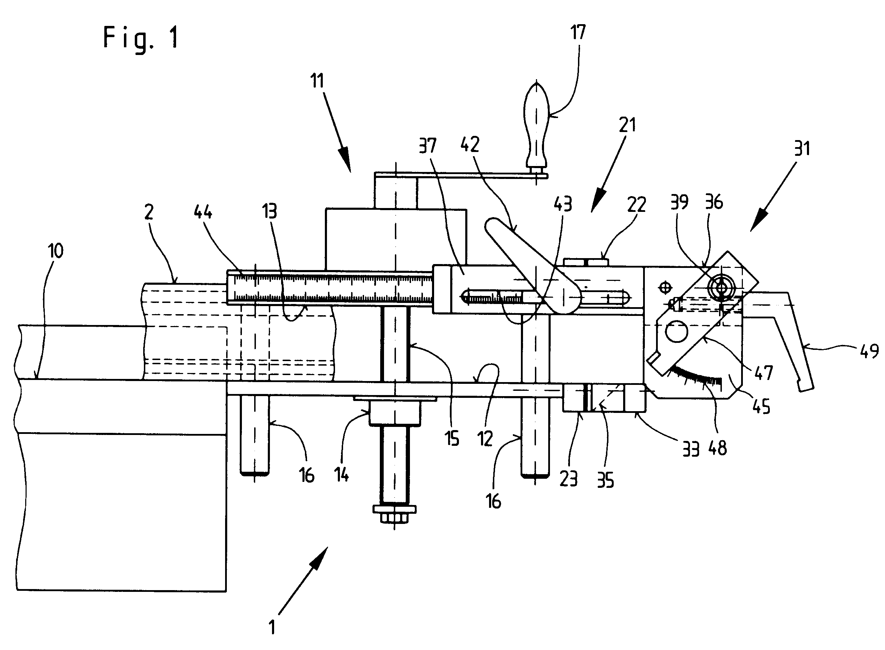

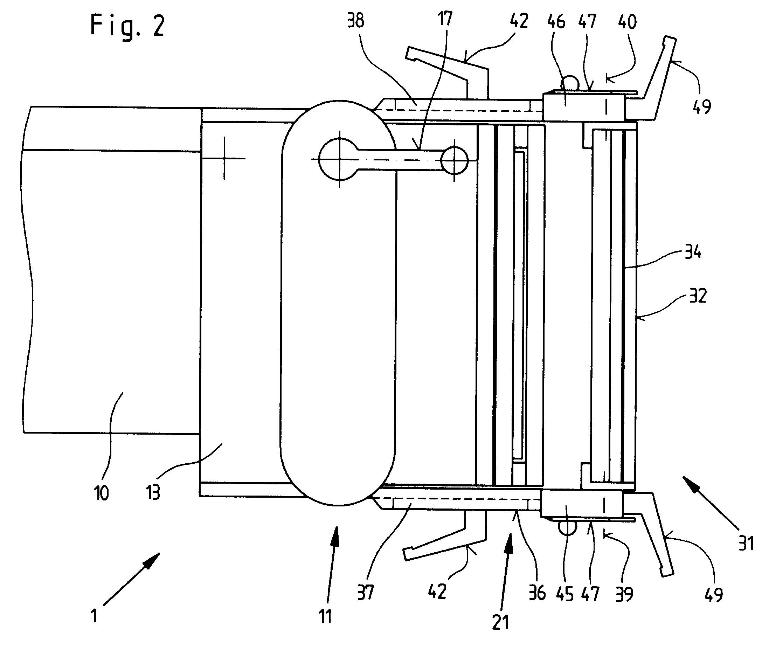

Die in den Figuren 1 bis 3 dargestellte und jeweils mit 1 bezeichnete Vorrichtung dient zum maßgenauen Ablängen eines Hohlprofils 2 mittels eines von Hand betätigten Werkzeuges, z. B. einer Stichsäge 3, und besteht im wesentlichen aus einer Spanneinrichtung 11 zur Halterung des Hohlprofils 2 während dessen Bearbeitung und einem Führungsglied 31, mittels dem das Sägeblatt 4 der Stichsäge 3 beim Sägevorgang oberhalb und unterhalb des Hohlprofils 2 exakt geführt ist. Ein Verlaufen des Sägeblattes 4 ist dadurch nahezu ausgeschlossen, eine saubere Schnittkante ist vielmehr durch die Führung des Sägeblattes 4 gewährleistet.

Die Spanneinrichtung 11 besteht hierbei aus zwei winkelig gestalteten Spannplatten 12 und 13, die somit das Hohlprofil 2 teilweise umgreifen und die zu dessen Einspannung gegeneinander verstellbar sind. Dazu sind an der Unterseite der ortsfest an einer Auflageplatte 10 angebrachten Spannplatte 12 zwei Muttern 14 befestigt, in denen Gewindespindeln 15 eingesetzt sind, Und auf der Spannplatte 13 ist ein durch eine Handkurbel 17 verstellbarer Kettentrieb 18 angebracht, so daß durch Verdrehen der Handkurbel 17 die Gewindespindel 15 in den Muttern 14 verschoben und die Spannplatte 13, die außerdem mittels Bolzen 16 in der Spannplatte 12 geführt ist, in der Höhe verstellt werden kann.

Das Führungsglied 31 besteht aus zwei Führungsschienen 32 und 33, die jeweils mit einem achssenkrecht zu dem abzulängenden Hohlprofil 2 verlaufenden Schlitz 34 bzw. 35 versehen sind. Die auf der Oberseite der Vorrichtung 1 vorgesehene Führungsschiene 32 ist hierbei in Längsrichtung des Hohlprofils 10 verschiebbar und in unterschiedlichen Winkelstellungen arretierbar, die untere Führungsschiene 33 ist dagegen ortsfest an der Spannplatte 12 der Spanneinrichtung 11 angebracht.

Zur verschiebbaren Halterung der Führungsschiene 32 dient ein Schlitz 36, der mittels zweier Arme 37 und 38 auf der Außenseite der Spannplatte 13 verschiebbar geführt ist. Mit Hilfe von Spannhebeln 42, die in die Spannplatte 13 eingesetzt sind und in die Arme 37 und 38 eingearbeitete Schlitze 43 durchgreifen, ist der Schlitten 36 in unterschiedlichen Lagen, die mit Hilfe einer an den Stirnseiten der Spannplatte 13 vorgesehenene Skallierungen 44 einstellbar sind, arretierbar.

Zur verschwenkbaren Halterung der Führungsschiene 32 sind des weiteren zwei Bolzen 39 und 40 vorgesehen, die fest mit der Führungsschiene 32 verbunden und in den Armen 37 und 38 des Schlittens 36 bzw. an diesem seitlich angebrachte Platten 45 und 46 gelagert sind. Um die Führungsschiene 32 in unterschiedlichen Winkelstellungen arretieren zu können, sind die Platten 45 und 46 in dem die Bolzen 39 bzw. 40 aufnehmenden Bereich geschlitzt, so daß diese mittels eines Spannhebels 49 gegen die Bolzen 39 bzw. 40 preßbar sind. Nach dem Einstellen der Winkellage der Führungsschine 32 - dazu sind auf den Bolzen 39 und 40 auf den Außenseiten Hebelstücke 47 aufgesetzt und an den Platten 45 und 46 sind Skallierungen 48 angebracht - kann die Führungsschiene 32 somit durch Verstellen der Spannhebel 49 arretiert werden.

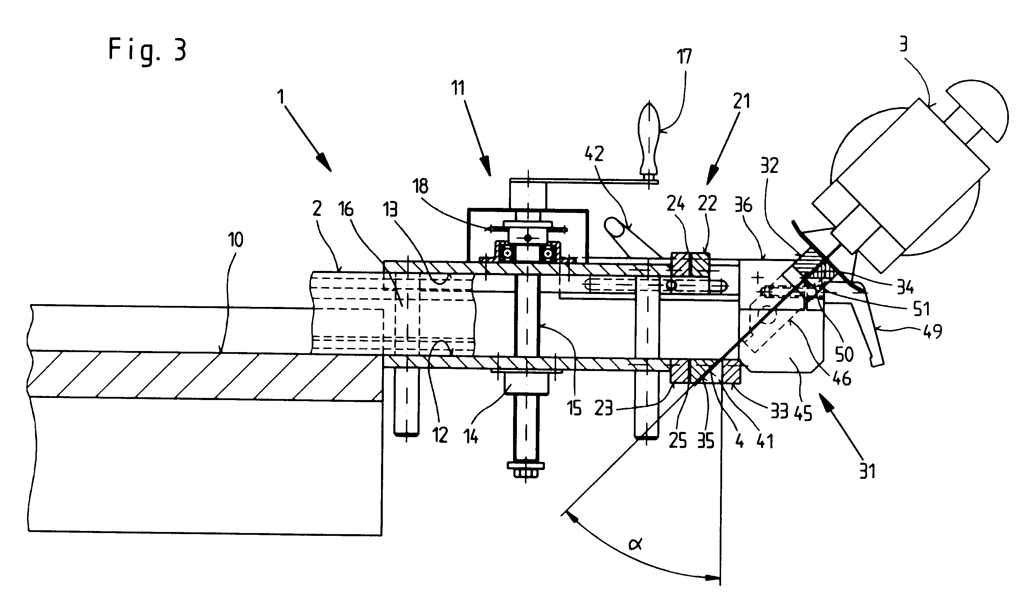

Der Führungsschlitz 35 der Führungsschiene 33 ist, wie dies insbesondere der Figur 3 zu entnehmen ist, mit einer Freisparung 41 versehen, die unter einem Winkel α von 50° nach außen divergierend ausgebildet ist. Auf diese Weise fluchtet die Freisparung 41 in jeder Betriebsstellung der Führungsschiene 32 mit dem in dieser vorgesehenen Führungsschlitz 34, so daß das Sägeblatt 4 der Stichsäge 3, zumal in die Führungsschiene 32 auf der Unterseite eine Freisparung 50 eingearbeitet und somit eine Fläche 51 zur Anlage an dem Hohlprofil 2 gebildet ist, stets sicher geführt ist.

Um ein in der Spanneinrichtung 11 eingespanntes Hohlprofil 2 auf Gehrung schneiden zu können, ist das Führungsglied 31 in Abhängigkeit von der Höhe des Hohlprofils 2 entsprechend axial zu verstellen und der Gehrungswinkel ist einzustellen. Zunächst ist einer Tabelle der Verstellweg des Schlittens 36 in Abhängigkeit von der Höhe des Hohlprofils 2 und dem vorgesehenen Schnittwinkel zu entnehmen und mit Hilfe der Skallierung 44 ist der Schlitten 36 entsprechend axial zu verschieben. Nach Arretierung des Schlittens 36 durch Anziehen der Spannhebel 42 wird der erforderliche Schwenkwinkel der Führungsschiene 32 eingestellt und diese wird durch Anziehen der Klemmhebel 49 arretiert - durch Einsetzen des Sägeblattes 4 der Stichsäge 3 in das Führungsglied 31 kann sodann das Hohlprofil 2 abgelängt werden.

Damit Hohlprofile rechtwinklig abgesägt werden können, ohne daß das Führungsglied 31 jeweils achssenkrecht ausgerichtet werden muß, ist die Spanneinrichtung 11 zusätzlich mit einem nicht verstellbaren Führungsglied 21 ausgestattet, das ebenfalls aus Führungsschlitzen 24 und 25 aufweisende Führungsschienen 22 und 23 besteht. Die Führungsschienen 22 und 23 sind ortsfest mit den Spannplatten 13 bzw. 12 verbunden, auch ist die Führungsschiene 23 in die Führungsschiene 33 des Führungsgliedes 31 integriert, so daß nahezu kein zusätzlicher Bauraum für das Führungsglied 21 erforderlich ist.

## Patentansprüche

1. Vorrichtung (1) zum Ablängen von Hohlprofilen (2), insbesondere von Kanalprofilen aus Stahlblech für Brüstungskanäle, mittels einer von Hand zu führenden Stichsäge (3) oder eines ähnlichen Werkzeuges, bestehend aus einer zwei gegeneinander verstellbare Spannplatten (12, 13) aufweisende Spanneinrichtung (11) zur Halterung des Hohlprofils (2) und einem mit dieser verbundenen Führungsglied (31), das durch zwei mit Führungsschlitzen (34, 35) zur Aufnahme des Sägeblattes (4) der Stichsäge (3) versehene Führungsschienen (34, 35) gebildet ist,
**dadurch gekennzeichnet,**
daß eine der Führungsschienen (32), vorzugsweise die auf der Oberseite der Vorrichtung (1) angeordnete Führungsschiene, in Achsrichtung des einzuspannenden Hohlprofils (2) verschiebbar mit der höhenverstellbaren Spannplatte (13) der Spanneinrichtung (11) verbunden und verschwenkbar gehalten ist und daß der Führungsschlitz (35) der anderen ortsfesten Führungsschiene (33) mit einer keilförmig gestalteten Freisparung (41) versehen ist, die in jeder Betriebsstellung der verstellbaren Führungsschiene (32) mit deren Führungsschlitz (34) fluchtet.

2. Vorrichtung nach Anspruch 1,
**dadurch gekennzeichnet,**
daß die verstellbare Führungsschiene (32) mittels eines Schlittens (36) mit der höhenverstellbaren Spannplatte (13) der Spanneinrichtung (11) begrenzt verschiebbar verbunden ist.

3. Vorrichtung nach Anspruch 2,
**dadurch gekennzeichnet,**
daß der Schlitten (36) durch zwei Arme (37, 38) gebildet ist, die auf den beiden Außenseiten der höhenverstellbaren Spannplatte (13) der Spanneinrichtung (11) verschiebbar geführt sind.

4. Vorrichtung nach einem oder mehreren der Ansprüche 1 bis 3,
**dadurch gekennzeichnet,**
daß die verstellbare Führungsschiene (32) mittels zweier Bolzen (39, 40) begrenzt verdrehbar in den beiden Armen (37, 38) des Schlittens (36) gelagert ist.

5. Vorrichtung nach einem oder mehreren der Ansprüche 1 bis 4,
**dadurch gekennzeichnet,**
daß die verstellbare Führungsschiene (32) in ihrer Winkelstellung mittels auf deren Lagerbolzen (39, 34) einwirkender durch Spannhebel (49) betätigbarer Klemmplatten (45, 46) oder dgl. arretierbar ist.

6. Vorrichtung nach einem oder mehreren der Ansprüche 1 bis 5,
**dadurch gekennzeichnet,**
daß der Schwenkwinkel der verstellbaren Führungsschiene (32) mit Hilfe vorzugsweise an den Außenseiten des Schlittens (36) vorgesehener Skallierungen (48), mit denen mit der Führungsschiene (32) fest verbundene Stellhebel (47) zusammenwirken, einstellbar ist.

7. Vorrichtung nach einem oder mehreren der Ansprüche 1 bis 6,
**dadurch gekennzeichnet,**
daß der Schlitten (36) mittels an der höhenverstellbaren Spannplatte (13) der Spanneinrichtung (11) angebrachter, vorzugsweise beide Arme (37, 38) des Schlittens (36) in Längsschlitzen (43) durchgreifender Spannhebel (42) arretierbar ist.

8. Vorrichtung nach einem oder mehreren der Ansprüche 1 bis 7,
**dadurch gekennzeichnet,**
daß der Verstellbereich des Schlittens (36) mittels vorzugsweise an der verstellbaren Spannplatte (13) der Spanneinrichtung (11) angebrachter Skallierungen (14) einstellbar ist.

9. Vorrichtung nach einem oder mehreren der Ansprüche 1 bis 8,
**dadurch gekennzeichnet,**
daß die verstellbare Führungsschiene (32) auf ihrer Unterseite mit einer durch eine in diese auf der der Spanneinrichtung (11) abgewandten Seite neben dem Führungsschlitz (34) eingearbeitete Freisparung (50) gebildete Fläche (51) zur Auflage auf dem Hohlprofil (2) versehen ist.

10. Vorrichtung nach einem oder mehreren der Ansprüche 1 bis 9,
**dadurch gekennzeichnet,**
daß die in die ortsfest angeordnete Führungsschiene (33) eingearbeitete Freisparung (41) unter einem Winkel α von etwa 50° nach außen divergierend ausgebildet ist.

11. Vorrichtung nach einem oder mehreren der Ansprüche 1 bis 10,
**dadurch gekennzeichnet,**
daß das Führungsglied (31) zusätzlich an einer achssenkrecht zu dem abzulängenden Hohlprofil (2) angeordnete Führungsschienen (22, 23) aufweisende Ablängvorrichtung (1) angebracht ist.

## Claims

1. A device (1) for cutting at length hollow structural members (2), in particular sheet steel duct profiles for sill-type trunking, by means of a compass saw (3) or a similar tool which is to be guided by hand, comprising a clamping device (11) made up of two mutually adjustable face plates (12, 13) in order to hold the hollow structural member (2) and a guide element (31) which is connected to the clamping device (11) and is formed by two guide rails (32, 33) equipped with guide slots (34, 35) for accommodating the saw blade (4) of the compass saw (3),
**characterised in that,**
one of the guide rails (32), in a preferred embodiment the guide rail on the upper side of the device (1), is connected to the face plate (13) of the clamping device (11) whose height can be altered and is held in a swivelling arrangement so it can be moved in the axial direction of the hollow structural member (2) to be clamped, and that the guide slot (35) of the other fixed guide rail (33) has a wedge-shaped recess (41) which is aligned with the guide slot (34) of the adjustable guide rail (32) in each of the operating positions of the guide rail (32).

2. The device in accordance with Claim 1,
**characterised in that,**
a slide (36) connects the adjustable guide rail (32) to the face plate (13) of the clamping device (11) whose height can be adjusted, with this connection permitting the guide rail (32) to be moved within limits.

3. The device in accordance with Claim 2,
**characterised in that,**
the slide (36) is formed by two arms (37, 38) which are movably guided on both external sides of the face plate (13) of the clamping device (11) whose height can be adjusted.

4. The device in accordance with one or more of Claims 1 to 3,
**characterised in that,**
two pins (39, 40) hold the adjustable guide rail (32) mounted in both the arms (37, 38) of the slide (36) in such a way as to allow the guide rail (32) a restricted turning range.

5. The device in accordance with one or more of Claims 1 to 4,
**characterised in that,**
the adjustable guide rail (32) can be locked in its angled position by means of clamping plates (45, 46) or similar which act on the bearing pins (39, 40) of the guide rail (32) and which can be actuated by means of a clamping lever (49).

6. The device in accordance with one or more of Claims 1 to 5,
**characterised in that,**
the swivel angle of the adjustable guide rail (32) can be adjusted with the help of scale marks (48) which are applied, in a preferred embodiment, to the external sides of the slide (36) and which act in conjunction with positioning levers (47) firmly attached to the guide rail (32).

7. The device in accordance with one or more of Claims 1 to 6,
**characterised in that,**
the slide (36) can be locked in place using a clamping lever (42) which is attached to the face plate (13) of the clamping device (11) whose height can be adjusted and which, in a preferred embodiment, passes through both arms (37, 38) of the slide through slots (43).

8. The device in accordance with one or more of Claims 1 to 7,
**characterised in that,**
the movement range of the slide (36) can be adjusted with the help of scale marks (44) applied, in a preferred embodiment, to the adjustable face plate (13) of the clamping device (11).

9. The device in accordance with one or more of Claims 1 to 8,
**characterised in that,**
the underside of the adjustable guide rail (32) has a surface (51) for making contact with the hollow structural member (2), with this surface (51) being formed by a recess (50) worked into the underside on the side opposite the clamping device (11) next to the guide slot (34).

10. The device in accordance with one or more of Claims 1 to 9,
**characterised in that,**
the recess (41) worked into the fixed guide rail (33) diverges outwards at an angle α of about 50°.

11. The device in accordance with one or more of Claims 1 to 10,
**characterised in that,**
the guide element (31) is additionally attached to a device (1) for cutting at length which is arranged perpendicularly to the hollow structural member (2) to be cut to length and which has guide rails (22, 23).

## Revendications

1. Dispositif (1) pour la coupe de profilés creux (2), notamment des profilés à canaux en tôle d'acier pour des canaux d'appui, moyennant une scie sauteuse (3) guidée manuellement ou un outil semblable, consistant d'un équipement de serrage (11) avec deux plaques de serrage (12, 13) déplaçables l'une par rapport à l'autre, et servant au support du profilé creux (2), et d'un organe de guidage (31) lié à celui-ci et formé par deux glissières de guidage (32, 33) munies de fentes de guidage (34, 35) pour recevoir la lame (4) de la scie sauteuse (3),
caractérisé en ce que
l'une des glissières de guidage (32), de préférence la glissière de guidage disposée au-dessus du dispositif (1) est liée pivotant et déplaçable en direction axiale du profilé creux à serrer (2), avec la plaque de serrage réglable verticalement (13) de l'équipement de serrage (11) et que la fente de guidage (35) de l'autre glissière de guidage stationnaire (33) comporte un évidement (41) sous la forme d'un coin qui, à chaque position de service de la glissière de guidage réglable (32) s'aligne à sa fente de guidage (34).

2. Dispositif d'après la revendication 1,
caractérisé en ce que,
au moyen d'un chariot (36), la glissière de guidage réglable (32) est liée à la plaque de serrage réglable verticalement (13) de l'équipement de serrage (11), de sorte qu'il lui soit permis un déplacement limité.

3. Dispositif d'après la revendication 2,
caractérisé en ce que
le chariot (36) est formé par deux bras (37, 38), guidés de façon réglable sur les deux faces extérieures de la plaque de serrage réglable verticalement (13) de l'équipement de serrage (11).

4. Dispositif d'après une ou plusieurs des revendications 1 à 3,
caractérisé en ce que,
au moyen de deux boulons (39, 40), la glissière de guidage réglable (32) est logée en rotation limitée dans les deux bras (37, 38) du chariot (36).

5. Dispositif d'après une ou plusieurs des revendications 1 à 4,
caractérisé en ce que,
la glissière de guidage réglable (32) peut être bloquée en sa position angulaire au moyen de plaques de serrage (45, 46) ou d'organes semblables, actionnés par des leviers de serrage (49) et agissant sur ses boulons-paliers (39, 40).

6. Dispositif d'après une ou plusieurs des revendications 1 à 5,
caractérisé en ce que
l'angle de pivotement de la glissière de guidage réglable (32) se laisse ajuster au moyen d'échelles (48) prévues de préférence sur les faces extérieures du chariot (36) et avec lesquelles collaborent des leviers de réglage (47) liés rigidement à la glissière de guidage (32).

7. Dispositif d'après une ou plusieurs des revendications 1 à 6,
caractérisé en ce que
le chariot (36) se laisse arrêter au moyen de leviers de serrage (42) prévus sur la plaque de serrage réglable verticalement (13) de l'équipement de serrage (11) et se trouvant de préférence en prise dans des fentes longitudinales (43) des deux bras (37, 38) du chariot (36).

8. Dispositif d'après une ou plusieurs des revendications 1 à 7,
caractérisé en ce que
la plage de réglage du chariot (36) se laisse régler au moyen d'échelles (14) prévues de préférence sur la plaque de serrage réglable verticalement (13) de l'équipement de serrage (11).

9. Dispositif d'après une ou plusieurs des revendications 1 à 8,
caractérisé en ce que
la face inférieure de la glissière de guidage réglable (32) est équipée d'une face (51) pour la portée sur le profilé creux (2), formée par un évidement (50) pratiquée dans celle-ci sur la face éloignée de l'équipement de serrage (11) à côté de la fente de guidage (34).

10. Dispositif d'après une ou plusieurs des revendications 1 à 9,
caractérisé en ce que
l'évidement (41) pratiqué dans la glissière de guidage stationnaire (33) est conçu sous un angle α d'env. 50° vers l'extérieur.

11. Dispositif d'après une ou plusieurs des revendications 1 a 10,
caractérisé en ce que
l'organe de guidage (31) est fixé supplémentairement à un dispositif de coupage (1) équipé de glissières de guidage (22, 23) disposées perpendiculairement au profilé creux (2) à couper.
